# EUROPÄISCHE PATENTSCHRIFT

(11) **EP 2 486 442 B1**
(45) Veröffentlichungstag und Bekanntmachung des Hinweises auf die Patenterteilung: **27.04.2016**
(21) Anmeldenummer: 10724264.6
(22) Anmeldetag: 29.04.2010
(51) Int. Cl.: G02C 1/02, G02C 5/14, G02C 5/22

(54) **BRILLE, INSBESONDERE BOHR-BRILLE**
EYEGLASSES, IN PARTICULAR DRILLED RIMLESS EYEGLASSES
LUNETTES, EN PARTICULIER LUNETTES PERCÉES

(30) Priorität: 06.10.2009 DE 202009013449 U
(43) Veröffentlichungstag der Anmeldung: 15.08.2012
(73) Patentinhaber: Dr. Eugen Beck GmbH & Co., 59302 Oelde (DE)
(72) Erfinder: HAVERKAMP, Helmut, 46569 Hünxe (DE)
(74) Vertreter: Meinke, Dabringhaus und Partner GbR
(86) Internationale Anmeldenummer: PCT/EP2010/002629
(87) Internationale Veröffentlichungsnummer: WO 2011/042069

(56) Entgegenhaltungen:
- EP-B1- 1 512 040
- DE-C- 925 915
- FR-A1- 2 900 245
- JP-U- 3 048 052
- US-A- 5 042 933
- US-B2- 7 011 405

## Beschreibung

Die Erfindung richtet sich auf eine Brille, insbesondere eine (rahmenlose) Bohr-Brille, der im Oberbegriff des Anspruches 1 angegebenen Gattung.

Aus der EP 1 512 040 der Anmelderin ist eine derartige Brille bekannt, bei der Abkröpfungen an jedem Brillenbügel und an jedem Ende der Nasenbrücke durch eine innenliegende Durchgangsbohrung gesteckt werden, während die anderen Durchgangsbohrungen zur Aufnahme und Fixierung eines Kunststofffadens, der die Bügel bzw. die Nasenbrücke hält, dienen. Da im Fixierbereich die Brillenbügel eine Eigenbewegung nicht durchführen können, sind in der Nähe der Außenränder der Brillengläser die Brillenbügel mit einem Scharnierelement ausgerüstet.

Die Fadenfixierung der Bügel weist eine Reihe von Vorteilen auf. So ergeben sich insbesondere ästhetische Vorteile, da die Befestigung der Bügel an den Gläsern kaum sichtbar ist, allerdings stellt das Brillenscharnier bei gewissen Brillengestaltungen wenigstens optisch ein gewisses Hindernis dar.

Hier setzt die Erfindung an, deren Aufgabe darin besteht, bei Aufrechterhaltung einer Fixierung der Brillenelemente mittels Kunststofffäden auf ein Brillenscharnier gänzlich zu verzichten.

Aus der JP3048052U ist eine Fixierung bekannt, die auch auf ein Brillenscharnier verzichtet, aber keine Kunststofffäden aufweist.

Bei einer Brille der eingangs bezeichneten Art wird diese Aufgabe gemäß der Erfindung dadurch gelöst, dass jeder Brillenbügel mit einer Drehachse und jedes Brillenglas mit einem außenrandseitigen Doppelpaar von Durchgangsbohrungen versehen ist, wobei die jeweilige Drehachse mittels der Kunststofffäden und der Durchgangsbohrungen an der Rückseite des entsprechenden Brillenglases befestigt ist.

Da der jeweilige Brillenbügel so gestaltet ist, dass er eine Drehachse bereitstellt, kann diese Drehachse unmittelbar am Brillenglas positioniert und durch die Kunststofffäden fixiert werden, wobei durch die Art der Befestigung die Drehbarkeit der Brillenbügel aufrechterhalten bleibt.

Ausgestaltungen der Erfindung ergeben sich aus den Unteransprüchen. Dabei kann vorgesehen sein, dass die Drehachse von einer Fadenschlinge mit durchgezogenen Fadendoppelenden umgriffen ist, wobei die Doppelenden durch eine der benachbarten Durchgangsbohrungen geführt und nachfolgend durch die andere benachbarte Durchgangsbohrung zurückgeführt sind.

Eine einfache Befestigung und Sicherung besteht erfindungsgemäß darin, dass die rückgeführten Doppelenden jedes Fadens über eine Verknotung am Brillenglas fixiert sind.

Zweckmäßig ist es, wenn die jeweils innenliegenden Durchgangsbohrungen zueinander etwa einen Abstand aufweisen, der der Drehachsenlänge des Bügels entspricht, wie dies die Erfindung auch vorsieht.

Eine zweckmäßige weitere Gestaltung der Erfindung besteht darin, dass jeder Brillenbügel aus einem Bügeldraht besteht, wobei die Bügeldrehachse durch Abwinkeln des Bügeldrahtes gebildet ist.

Ferner kann vorgesehen sein, dass der Bügeldraht nach Bildung der Drehachse zurückgebogen und sein freies Ende am Bügeldraht fixiert ist. Damit wird der Bügeldraht einschließlich der Drehachse ausschließlich aus einem Draht gebildet, der durch die entsprechenden Knicke die hierbei benötigten Elemente bildet, wobei beispielsweise das freie zurückgebogene Ende des Bügeldrahtes am Hauptbereich des Brillenbügels etwa durch Verlöten fixiert sein kann.

Alternativ kann vorgesehen sein, dass jeder Brillenbügel aus einem vollflächigen Element aus Kunststoff und/oder Metall besteht, wobei die Bügeldrehachse als [-förmiger Steg ausgebildet ist, dessen freie Enden mit dem vollflächigen Element verbunden sind. Die jeweilige Bügeldrehachse ragt dann ösenförmig aus dem Brillenbügel heraus und ermöglicht die Durchführung des jeweiligen Fadens.

Die Erfindung ist nachstehend anhand der Zeichnung beispielsweise näher erläutert. Diese zeigt in den
- Fig. 1 bis 3: eine Brille in drei Ansichten,
- Fig. 4: die einzelnen Befestigungsschritte eines Brillenbügels,
- Fig. 5: einen endgültig befestigten Brillenbügel in vergrößerter Schnittdarstellung sowie in
- Fig. 6a bis 6e: Brillenbügelvarianten nach der Erfindung.

Die allgemein mit 1 bezeichnete Brille ist als Nur-Glas-Brille gestaltet, d.h. die mit 2 bezeichneten Gläser weisen keine eigene Rahmen-Fassung auf, vielmehr ist jedes Brillenglas mit einem Doppelpaar aus mit 3 bezeichneten Durchgangsbohrungen zur Befestigung der Brillenbügel und weiteren, innen positionierten Durchgangsbohrungen für die Befestigung des Nasenbügels versehen, wobei es hier auf letzteres nicht weiter ankommt.

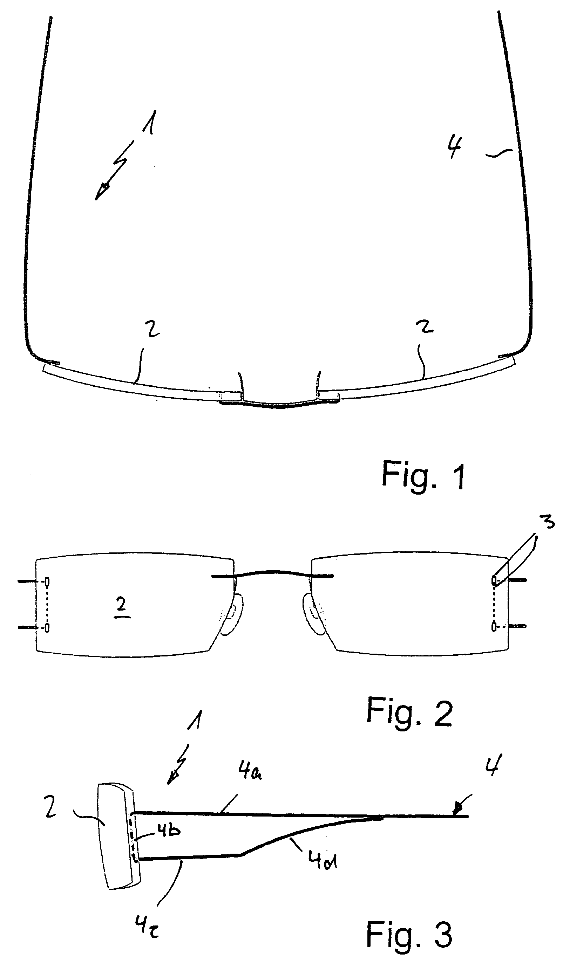

Jeder Brillenbügel 4 ist z.B. aus einem Draht einstückig gebildet, wobei jeder Brillenbügel 4 zunächst einen in Fig. 3 mit 4a bezeichneten oberen Bereich aufweist, der im Wesentlichen senkrecht abgeknickt und dann wiederum zurückgeknickt ist. Dieser eine Bügeldrehachse bildende Bereich ist in Fig. 3 mit 4b bezeichnet, wobei über weitere Bereiche 4c und 4d der Draht wieder zurück auf den ersten Bereich 4a geführt ist, um mit diesem verbunden zu werden, etwa durch Löten od. dgl.

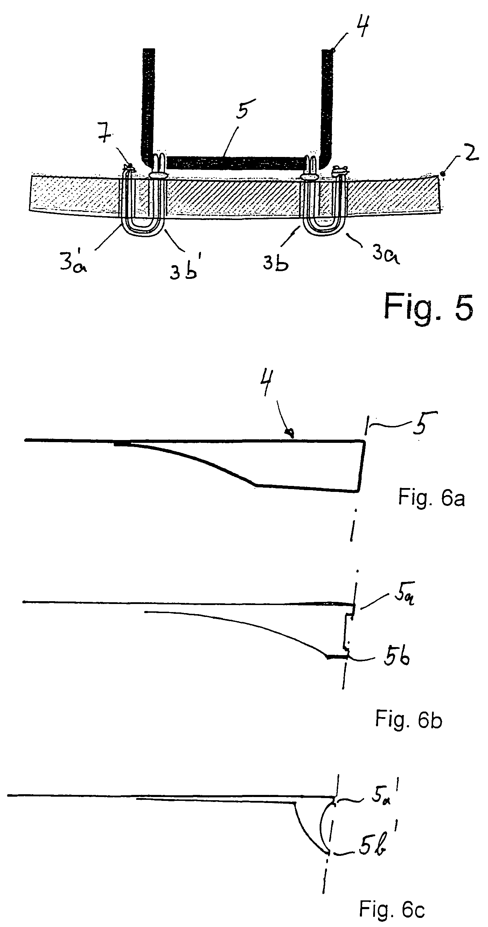

Zur einfacheren Beschreibung ist der Achsenbereich 4b des Brillendrahtes 4 im Weiteren mit 5 bezeichnet, wobei die Drehachse selbst in Fig. 6a gestrichelt angedeutet ist.

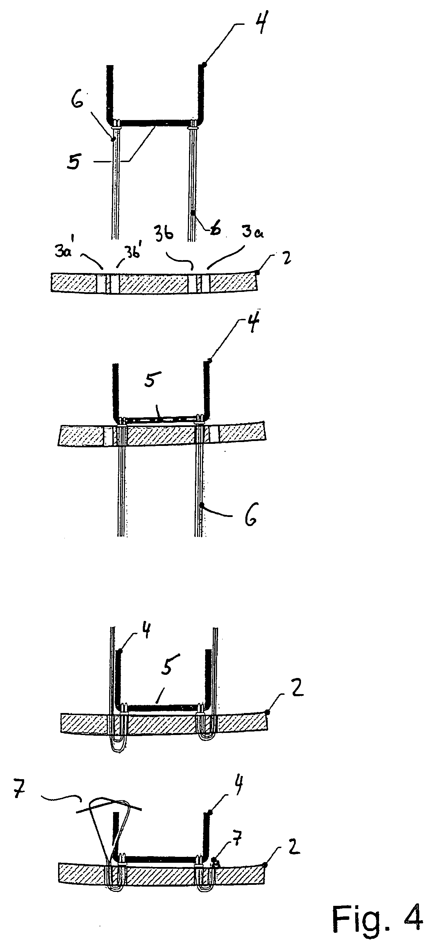

Der Brillenbügel 4 ist mit Hilfe seiner Drehachse 5 am jeweiligen Brillenglas 2 befestigt, wobei die einzelnen Befestigungsschritte in Fig. 4 wiedergegeben sind. Zur Befestigung der Drehachse 5 weist jedes Brillenglas eng benachbart ein erstes Paar von Durchgangsbohrungen auf, diese Durchgangsbohrungen sind mit 3a bzw. 3b bezeichnet und ein zweites Paar von Durchgangsbohrungen, die mit 3a' und 3b' bezeichnet sind, wobei der Abstand zwischen den beiden innenliegenden Durchgangsbohrungen 3b und 3b' etwa der Länge der Drehachse 5 bei dem in den Fig. 1 bis 5 dargestellten Beispiel entspricht.

Die Montage der Brillenbügel 4 am jeweiligen Brillenglas 2 ist folgende:
Unter Bildung von Schlingen werden zwei Kunststofffäden, z.B. klarsichtige Perlonfäden 6, mit der Drehachse 5 verbunden, wobei die freien Enden durch die innenliegenden Durchgangsbohrungen 3b und 3b' geführt werden. Im weiteren Schritt werden die freien Enden des jeweiligen Perlonfadens zurück durch die Durchgangsbohrungen 3a bzw. 3a' geführt und schließlich durch einen einfachen Knoten, wie dies in Fig. 4 untere Abbildung gezeigt ist, gesichert. Der Knoten ist dabei mit 7 bezeichnet.

Erkennbar wird durch diese Montage erreicht, dass die beschriebene Fixiermethode von Nur-Glas-Bohr-Brillen anderen Systemen deutlich überlegen ist, sie ist kostengünstiger und bedarf nur eines handelsüblichen Nylonfadens zur Befestigung der Bügel an den Gläsern.

Die vorher beschriebene Art der Bügelfixierung stellt ebenso eine gelenkige Verbindung zwischen den Ohrbügeln und dem Mittelteil der Brille her. Im Gegensatz zu herkömmlichen Scharniersystemen ist diese optisch kaum wahrnehmbar. Durch die Lage der Scharnierachse unmittelbar an den Rückseiten der Gläser, eröffnet sich über den gesamten Bügelbereich hinweg eine maximale Gestaltungsfreiheit. Dieser Aspekt ist für das Brillendesign von besonderer Bedeutung, da sonst der bei Randlosbrillen optisch besonders relevante Backe-Bügelbereich durch die Scharniere zahlreichen Vorgaben und Einschränkungen unterliegt.

Da die Bügelbefestigung die Drehgelenke bereits beinhaltet, entfallen die sonst notwendigen Scharnierteile oder aufwändigen Konstruktionen. Die Nylonfadenschlingen stehen durch das stramme Verknoten der Fadenenden stets unter einer permanenten Spannung. Dadurch ist ein dauerhaft präziser Scharniergang verlässlich gewährleistet.

Statt einer Bügelgestaltung, wie sie in den Fig. 5 und Fig. 6a gezeigt ist, kann die Drahtgestaltung auch anders ausfallen, derart, dass sich nur Drehachsenelemente 5a und 5b ausbilden, die zur Befestigung der Bügel dienen, wie Fig. 6b und 6c zeigen.

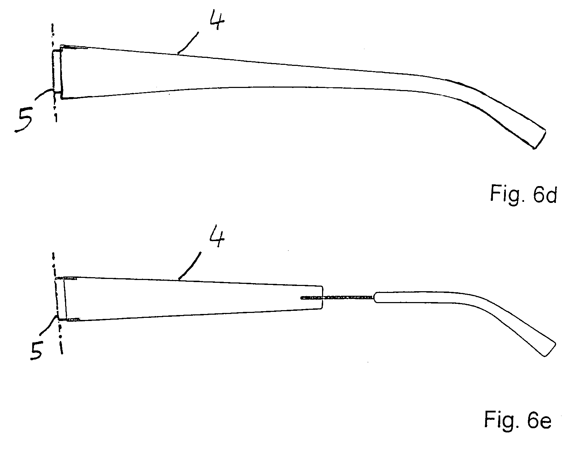

Alternativ kann gemäß Fig. 6d und 6e auch jeder Brillenbügel 4 aus einem vollflächigen Element aus Kunststoff und/oder Metall bestehen, wobei die jeweilige Bügeldrehachse 5 als [-förmiger Steg ausgebildet ist, der geeignet mit dem Brillenbügel 4 verbunden ist. Dieser Steg ist ösenförmig ausgestaltet und ermöglicht das Hindurchführen des Fadens 6.

## Patentansprüche

1. Brille, insbesondere Bohr-Brille (1), wobei die Brillengläser (2) außenrandseitige Durchgangsbohrungen (3) zur Fixierung der Brillenbügel (4) mittels Kunststofffäden (6) aufweisen,
**dadurch gekennzeichnet,**
**dass** jeder Brillenbügel (4) mit einer das Drehen des Bügels ermöglichenden Achse (5) und jedes Brillenglas (2) mit einem außenrandseitigen Doppelpaar (3a,3b und 3a',3b') von Durchgangsbohrungen versehen ist, wobei die jeweilige Achse (5) mittels der Kunststofffäden (6) und der Durchgangsbohrungen (3) an der Rückseite des entsprechenden Brillenglases (2) befestigt ist.

2. Brille nach Anspruch 1,
**dadurch gekennzeichnet,**
**dass** die Achse (5) von einer Fadenschlinge mit durchgezogenen Fadenenden umgriffen ist, wobei die Fadenenden durch eine der benachbarten Durchgangsbohrungen (3b bzw. 3b') geführt und nachfolgend durch die andere benachbarte Durchgangsbohrung (3a bzw. 3a') zurückgeführt sind, wobei die rückgeführten Enden jedes Fadens (6) über eine Verknotung (7) am Brillenglas (2) fixiert sind.

3. Brille nach einem oder mehreren der Ansprüche 1 oder 2,
**dadurch gekennzeichnet,**
**dass** die jeweils innenliegenden Durchgangsbohrungen (3b, 3b') zueinander etwa einen Abstand aufweisen, der der Achsenlänge des Bügels (4) entspricht.

4. Brille nach einem oder mehreren der Ansprüche 1 bis 3,
**dadurch gekennzeichnet,**
**dass** jeder Brillenbügel (4) aus einem Bügeldraht besteht, wobei die Achse (5) durch Abwinkeln des Bügeldrahtes gebildet ist.

5. Brille nach Anspruch 4,
**dadurch gekennzeichnet,**
**dass** der Bügeldraht (4) nach Bildung der Achse (4b bzw. 5) zurückgebogen und sein freies Ende (4d) am Bügeldraht (4a) fixiert ist.

6. Brille nach einem oder mehreren der Ansprüche 1 bis 3,
**dadurch gekennzeichnet,**
**dass** jeder Brillenbügel (4) aus einem vollflächigen Element aus Kunststoff und/oder Metall besteht, wobei die Achse (5) als U-förmiger Steg ausgebildet ist, dessen freie Enden mit dem vollflächigen Element verbunden sind.

## Claims

1. Glasses, more particularly rimless glasses (1), wherein on their outer marginal area the glasses lenses (2) have drilled holes (3) for fixing the temples (4) by means of synthetic threads (6)
**characterised in that**
each temple (4) is provided with an axis (5) allowing the temple to be turned and each lens (2) has an outer marginal double pair (3a, 3b and 3a', 3b') of drilled holes, wherein each axis (5) is fixed by means of the synthetic threads (6) and the drilled holes (3) to the rear of the corresponding lens (2).

2. Glasses according to claim 1
**characterised in that**
the axis (5) is surrounded by a thread loop with pulled-through thread ends, wherein the thread ends are fed through one of the adjacent drilled holes (3b and 3b' respectively) and then returned through the other adjacent drilled hole (3a and 3a' respectively), wherein the returned ends of each thread (6) are fixed to the lens (2) by means of a knot (7).

3. Glasses according to any one of claims 1 or 2
**characterised in that**
the inner-lying drilled holes (3b, 3b') are at a distance from one another which corresponds to the axis length of the temple (4).

4. Glasses according to one of more of claims 1 to 3
**characterised in that**
each temple (4) consists of a temple wire, wherein the axis (5) is formed by bending the temple wire.

5. Glasses according to claim 4
**characterised in that**
after forming the axis (4b and 5) the temple wire (4) is bent back and its free end (4d) is fixed on the temple wire (4a).

6. Glasses according to any one of claims 1 to 3
**characterised in that**
each temple (4) comprises an full-surface element made of plastic and/or metal, wherein the axis (5) is formed as a U-shaped bar, the free ends of which are connected to the full-surface element.

## Revendications

1. Lunettes, notamment lunettes percées (1), les verres de lunettes (2) comportant des trous traversants (3) du côté du bord extérieur pour fixer les branches de lunettes (4) au moyen de fils plastiques (6),
**caractérisées en ce que** chaque branche de lunettes (4) est munie d'un axe (5) permettant la rotation de la branche et chaque verre de lunettes (2) est muni d'une paire double de trous traversants (3a, 3b et 3a', 3b') du côté du bord extérieur, l'axe (5) respectif étant fixé à l'arrière du verre correspondant (2) au moyen des fils plastiques (6) et des trous traversants (3).

2. Lunettes selon la revendication 1, **caractérisées en ce que** l'axe (5) est entouré par une boucle de fil avec des extrémités de fil tirées, les extrémités de fil passant dans l'un des trous traversants voisins (3b respectivement 3b') et repassant ensuite dans l'autre trou traversant voisin (3a respectivement 3a'), les extrémités repassées de chaque fil (6) étant alors fixées au verre de lunettes (2) par l'intermédiaire d'un noeud (7).

3. Lunettes selon une ou plusieurs des revendications 1 ou 2, **caractérisées en ce que** les trous traversants (3b, 3b') situés respectivement à l'intérieur sont à une distance l'un de l'autre qui correspond à peu près à la longueur d'axe de la branche (4).

4. Lunettes selon une ou plusieurs des revendications 1 à 3, **caractérisées en ce que** chaque branche de lunettes (4) est constituée d'un fil de branche, l'axe (5) étant formé en pliant le fil de branche.

5. Lunettes selon la revendication 4, **caractérisées en ce que** le fil de branche (4) est replié après la formation de l'axe (4b respectivement 5) et son extrémité libre (4d) est fixée au fil de branche (4a).

6. Lunettes selon une ou plusieurs des revendications 1 à 3, **caractérisées en ce que** chaque branche de lunettes (4) est constituée d'un élément surfacique en plastique et/ou métal, l'axe (5) étant conçu comme une traverse en forme de U dont les extrémités libres sont assemblées à l'élément surfacique.
